(19) Europäisches Patentamt
European Patent Office
Office européen des brevets

(11) **EP 4 432 426 A1**

(12) **EUROPEAN PATENT APPLICATION**
published in accordance with Art. 153(4) EPC

(43) Date of publication:
**18.09.2024 Bulletin 2024/38**

(21) Application number: **21963659.4**

(22) Date of filing: **13.11.2021**

(51) International Patent Classification (IPC):
***H01M 50/10*** (2021.01)

(52) Cooperative Patent Classification (CPC):
**Y02E 60/10**

(86) International application number:
**PCT/CN2021/130484**

(87) International publication number:
**WO 2023/082211 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **YAN, Kun**
**Ningde, Fujian 352100 (CN)**
• **LIU, Ning**
**Ningde, Fujian 352100 (CN)**
• **HE, Ping**
**Ningde, Fujian 352100 (CN)**
• **YANG, Jianhui**
**Ningde, Fujian 352100 (CN)**

(74) Representative: **Icosa
83 avenue Denfert-Rochereau
75014 Paris (FR)**

(54) **BATTERY CELL CASING, BATTERY CELL, BATTERY AND ELECTRICAL DEVICE**

(57) Some embodiments of this application relate to the technical field of electronic devices, and in particular, disclose a cell housing, a cell, a battery, and an electric device. The cell housing defines an accommodating cavity for accommodating an electrode assembly. The cell housing includes a first plate body and a second plate body. The first plate body is configured to define the accommodating cavity. The second plate body is configured to define the accommodating cavity. A maximum thickness of the first plate body is greater than a maximum thickness of the second plate body, and a difference between the maximum thickness L1 of the first plate body and the maximum thickness L2 of the second plate body satisfies 0.01 mm<L1-L2<0.5 mm. In this solution, a maximum thickness of at least one plate body (that is, the first plate body) of the cell housing is greater than a maximum thickness of at least one plate body (that is, the second plate body). In this way, the first plate body is thicker and can effectively protect an electrode assembly accommodated in the cell housing. The second plate body is thinner and can allow the electrode assembly to have a larger volume, thereby increasing the energy density of the cell.

FIG. 1

EP 4 432 426 A1

## Description

## TECHNICAL FIELD

Embodiments of this application relate to the technical field of electronic devices, and in particular, to a cell housing, a cell, a battery, and an electric device.

## BACKGROUND

Existing cells cannot meet the requirements of both high structural strength and high energy density.

## SUMMARY

Some embodiments of this application provide a cell housing, a cell, a battery, and an electric device, so as to allow a cell with such cell housing to have both desirable structural strength and high energy density.

To solve the foregoing technical problem, this application adopts a technical solution as follows. A cell housing is provided, where the cell housing defines an accommodating cavity for accommodating an electrode assembly. The cell housing includes a first plate body and a second plate body. The first plate body is configured to define the accommodating cavity. The second plate body is configured to define the accommodating cavity. A maximum thickness of the first plate body is greater than a maximum thickness of the second plate body, and a difference between the maximum thickness L1 of the first plate body and the maximum thickness L2 of the second plate body satisfies 0.01 mm<L1-L2<0.5 mm. In this solution, a maximum thickness of at least one plate body (that is, the first plate body) of the cell housing is greater than a maximum thickness of at least one plate body (that is, the second plate body). In this way, the first plate body is thicker and therefore can allow the cell housing to have desirable structural strength at least at a position where the first plate body is located, thereby effectively protecting the electrode assembly accommodated in the cell housing. The second plate body is thinner and therefore can provide a larger space for the electrode assembly, such that the electrode assembly can have a larger volume, thereby increasing the energy density of the cell including the cell housing of this application. In conclusion, the cell housing of this application can allow the cell including the cell housing to have both desirable structural strength and high energy density.

In a further embodiment, the maximum thickness L1 of the first plate body satisfies 0.1 mm≤L1≤1 mm, and the maximum thickness L2 of the second plate body satisfies 0.03 mm≤L2≤0.6 mm. In this solution, when the maximum thickness of the first plate body is within the foregoing size range, the first plate body can have desirable structural strength. When the maximum thickness of the first plate body is less than 0.1 mm, the first plate body has undesirable structural strength. When the maximum thickness of the first plate body is greater than 1 mm, the first plate body occupies too much space in the entire cell, resulting in low energy density of the entire cell. When the maximum thickness of the second plate body is less than 0.03 mm, a basic protection effect of the second plate body cannot be guaranteed; and when thickness of the second plate body is greater than 0.6 mm, the second plate body occupies too much space, which is not conducive to increasing the energy density of the cell.

In a further embodiment, the cell housing satisfies at least one of the following conditions (a) to (c): (a) the maximum thickness L1 of the first plate body satisfies 0.2 mm≤L1≤0.3 mm; (b) the maximum thickness L2 of the second plate body satisfies 0.075 mm≤L2≤0.15 mm; or (c) a ratio of the maximum thickness L1 of the first plate body to the maximum thickness L2 of the second plate body satisfies $1 \leq L1/L2 \leq 10$. In this solution, when the maximum thickness L1 of the first plate body satisfies 0.2 mm≤L1≤0.3 mm, the cell including the cell housing has higher structural strength. The maximum thickness L2 of the second plate body satisfies 0.075 mm≤L2≤0.15 mm. The cell including the cell housing has higher energy density. When the ratio of the maximum thickness L1 of the first plate body to the maximum thickness L2 of the second plate body satisfies $1 \leq L1/L2 \leq 10$, the structural strength and energy density of the cell including the cell housing match each other better.

In a further embodiment, the first plate body includes a first plate layer; the first plate layer is made of a carbon material, a metal material, or a polymer material; and a maximum thickness of the first plate layer ranges from 0.1 mm to 0.4 mm. In this solution, when the maximum thickness of the first plate layer exerting a support function in the first plate body is within the foregoing range, the first plate body has better overall structural strength.

In a further embodiment, the cell housing includes a frame body and a third plate body. The frame body is annular; the frame body includes the first plate body; the frame body includes a first end opening and a second end opening facing each other; and the second plate body is connected to the frame body and covers the first end opening. The third plate body is connected to the frame body and covers the second end opening, where the frame body, the first plate body, and the third plate body jointly define the accommodating cavity. In this solution, the frame body is provided with a plate body with a larger maximum thickness, so that the frame body has higher structural strength.

In a further embodiment, the frame body is configured to be disposed around an axis parallel to a thickness direction of the electrode assembly. In this solution, the first plate body occupies a smaller space and can allow the cell to have higher energy density while guaranteeing the structural strength of the cell.

In a further embodiment, a difference between a maximum thickness L3 of the third plate body and the maximum thickness L2 of the second plate body satisfies: 0≤|L3-L2|≤0.2 mm. In this solution, the maximum thickness of the third plate body is substantially the same as the maximum thickness of the second plate body, to be specific, at least two plate bodies of the cell housing are thinner, such that the cell including the cell housing has higher energy density.

In a further embodiment, the frame body further includes a fourth plate body opposite the first plate body, and a difference between a maximum thickness L4 of the fourth plate body and the maximum thickness L1 of the first plate body satisfies: 0≤|L4-L1|≤0.15 mm. In this solution, the fourth plate body and the first plate body have substantially identical thicknesses, to be specific, two opposite plate bodies of the cell housing are thicker, further enhancing the structural strength of the cell housing.

In a further embodiment, the frame body includes a fifth plate body and a sixth plate body. A first end of the fifth plate body is connected to a first end of the first plate body, and a second end of the fifth plate body is connected to a first end of the fourth plate body. The sixth plate body is opposite the fifth plate body, a first end of the sixth plate body is connected to a second end of the first plate body, and a second end of the sixth plate body is connected to a second end of the fourth plate body. A difference between a maximum thickness L5 of the fifth plate body and the maximum thickness L1 of the first plate body satisfies: 0≤|L5-L1|≤0.5 mm; and a maximum thickness L6 of the sixth plate body and the maximum thickness L1 of the first plate body satisfy: 0≤|L6-L1|≤0.5 mm. In this solution, the thicknesses of the fifth plate body and sixth plate body are substantially identical to the thicknesses of the first plate body and fourth plate body. In other words, the cell housing includes an annular frame body, and each plate body of the annular frame body is thick, such that the cell housing can provide a good protection effect along the circumference of the frame body, further enhancing the structural strength of the cell including the cell housing.

In a further embodiment, the cell housing satisfies at least one of the following conditions (e) to (h): (e) an inner wall of the first plate body facing the accommodating cavity angularly intersects with an inner wall of the fifth plate body facing the accommodating cavity, and an intersection angle α1 satisfies 80°≤α1≤100°; (f) an inner wall of the first plate body facing the accommodating cavity angularly intersects with an inner wall of the sixth plate body facing the accommodating cavity, and an intersection angle α2 satisfies 80°≤α2≤100°; (g) an inner wall of the fourth plate body facing the accommodating cavity angularly intersects with an inner wall of the fifth plate body facing the accommodating cavity, and an intersection angle α3 satisfies 80°≤α3≤100°; or (h) an inner wall of the fourth plate body facing the accommodating cavity angularly intersects with an inner wall of the sixth plate body facing the accommodating cavity, and an intersection angle α4 satisfies 80°≤α4≤100°. In this solution, at least one corner end of the frame body is arranged in a right angle. Compared with an arrangement in which corner ends of two plate bodies form an arc angle in the prior art, the arrangement in this solution allows for a larger arrangement space for the electrode assembly and allows the cell to have higher energy density.

In a further embodiment, an inner wall of the second plate body facing the accommodating cavity angularly intersects with each of the inner wall of the first plate body facing the accommodating cavity, the inner wall of the fourth plate body facing the accommodating cavity, the inner wall of the fifth plate body facing the accommodating cavity, and the inner wall of the sixth plate body facing the accommodating cavity, and an intersection angle α5 satisfies 80°≤α5≤100°. An inner wall of the third plate body facing the accommodating cavity angularly intersects with each of the inner wall of the first plate body facing the accommodating cavity, the inner wall of the fourth plate body facing the accommodating cavity, the inner wall of the fifth plate body facing the accommodating cavity, and the inner wall of the sixth plate body facing the accommodating cavity, and an intersection angle α6 satisfies 80°≤α6≤100°. In this solution, a corner end at a joint between the frame body and the second plate body or the third plate body is substantially in right-angled intersection. Compared with an arrangement in which corner ends of two plate bodies form an arc angle in the prior art, the arrangement in this solution allows for a larger arrangement space for the electrode assembly and allows the cell to have higher energy density.

In a further embodiment, the cell housing is configured to accommodate a wound electrode assembly, and the wound electrode assembly includes a first bent portion and a second bent portion opposite each other. The inner wall of the fifth plate body is recessed toward a direction away from the accommodating cavity so as to accommodate a side edge of the first bent portion facing the fifth plate body, and the inner wall of the sixth plate body is recessed toward a direction away from the accommodating cavity so as to accommodate a side edge of the second bent portion facing the sixth plate body. In this solution, a larger arrangement space is provided for the electrode assembly in the cell housing, and the cell has higher energy density.

In a further embodiment, an orthographic projection of the inner wall of the fifth plate body facing the accommodating cavity in a first projection plane is an arc-shaped line, and the first projection plane is parallel to a thickness direction of the fifth plate body; or an orthographic projection of the inner wall of the sixth plate body facing the accommodating cavity in the first projection plane is an arc-shaped line. In this solution, the concave shape of the fifth plate body and the concave shape of the sixth plate body better match shapes of the first bent portion and second bent portion of the electrode assembly, thereby reducing loss of the structural strength while maximizing the energy density.

In a further embodiment, the inner wall of the fifth plate body facing the accommodating cavity includes a first planar wall, a second planar wall, and a third planar wall; a side edge of the first planar wall is connected to the second plate body, and another opposite side edge extends toward an outer wall of the fifth plate body facing away from the accommodating cavity and is connected to the second planar wall; and a side edge of the third planar wall is connected to the third plate body, and another opposite side edge extends toward the outer wall of the fifth plate body facing away from the accommodating cavity and is connected to a side edge of the second planar wall facing away from the first planar wall; or the inner wall of the sixth plate body facing the accommodating cavity includes a fourth planar wall, a fifth planar wall, and a sixth planar wall; a side edge of the fourth planar wall is connected to the second plate body, and another opposite side edge extends toward an outer wall of the sixth plate body facing away from the accommodating cavity and is connected to the fifth planar wall; and a side edge of the sixth planar wall is connected to the third plate body, and another opposite side edge extends toward the outer wall of the sixth plate body facing away from the accommodating cavity and is connected to a side edge of the fifth planar wall facing away from the fourth planar wall. In this solution, an inner wall surface of the fifth plate body and an inner wall surface of the sixth plate body are more convenient to process, and the shapes thereof can match more types of electrode assemblies, achieving better adaptability.

In a further embodiment, the frame body is an integrally formed structure. In this solution, the structural strength of the cell housing can be further enhanced.

In a further embodiment, the first plate body, the second plate body, the third plate body, the fourth plate body, the fifth plate body, and the sixth plate body are each a plate body with uniform thickness. In this solution, each plate body is configured to have a uniform thickness and different plate bodies may vary in thickness. To be specific, the maximum thickness of each plate body is substantially the same as a minimum thickness thereof, such that regularity of space in the accommodating cavity can be improved, facilitating structural arrangement of the cell.

In a further embodiment, the cell housing satisfies at least one of the following conditions (i) to (m): (i) the second plate body includes a second plate layer, the second plate layer is made of a ceramic material, a carbon material, or a polymer material, and a maximum thickness of the second plate layer ranges from 0.03 mm to 0.2 mm; (j) the third plate body includes a third plate layer, the third plate layer is made of a ceramic material, a carbon material, or a polymer material, and a maximum thickness of the third plate layer ranges from 0.03 mm to 0.2 mm; (k) the fourth plate body includes a fourth plate layer, the fourth plate layer is made of a carbon material, a metal material, or a polymer material, and a maximum thickness of the fourth plate layer ranges from 0.1 mm to 0.4 mm; (1) the fifth plate body includes a fifth plate layer, the fifth plate layer is made of a carbon material, a metal material, or a polymer material, and a maximum thickness of the fifth plate layer ranges from 0.1 mm to 0.4 mm; or (m) the sixth plate body includes a sixth plate layer, the sixth plate layer is made of a carbon material, a metal material, or a polymer material, and a maximum thickness of the sixth plate layer ranges from 0.1 mm to 0.4 mm. In this solution, when the material and maximum thickness of the second plate layer exerting a main protection function in the second plate body are within the foregoing ranges, the second plate layer can have a basic protection effect and does not occupy too much space. When the material and maximum thickness of the third plate layer exerting a main protection function in the third plate body are within the foregoing ranges, the third plate layer can have a basic protection effect and does not occupy too much space. When the material and maximum thickness of the fourth plate layer exerting a main protection function in the fourth plate body are within the foregoing ranges, the fourth plate layer can have high structural strength without occupying too much space. When the material and maximum thickness of the fifth plate layer exerting a main protection function in the fifth plate body are within the foregoing ranges, the fifth plate layer can have high structural strength without occupying too much space. When the material and maximum thickness of the sixth plate layer exerting a main protection function in the sixth plate body are within the foregoing ranges, the sixth plate layer can have high structural strength without occupying too much space.

In a further embodiment, the second plate body is welded to the frame body. The third plate body is welded to the frame body. In this solution, the second plate body and the third plate body have higher connection strength with the frame body.

In a further embodiment, the second plate body is provided with an explosion-proof valve. In this solution, the explosion-proof valve is disposed on the thinner second plate body, which can reduce processing difficulty of the explosion-proof valve and also enhance protection function of the explosion-proof valve.

In a further embodiment, the first plate body is provided with an electrolyte injection hole in communication with the accommodating cavity. In this solution, the electrolyte injection hole is provided in the thicker first plate body, which can facilitate opening and sealing of the electrolyte injection hole.

In a further embodiment, the first plate body is provided with a pole. In this solution, the pole is disposed on the thicker first plate body, which can facilitate arrangement of the pole.

According to a second aspect, this application further provides a cell including the cell housing according to any one of the foregoing embodiments. An electrode assembly is disposed in an accommodating cavity.

According to a third aspect, this application further provides a battery including the cell according to the foregoing embodiments.

According to a fourth aspect, this application further provides an electric device including the battery according to the foregoing embodiments.

According to the cell housing provided in this application, a maximum thickness of at least one plate body (that is, the first plate body) of the cell housing is greater than a maximum thickness of at least one plate body (that is, the second plate body). In this way, the first plate body is thicker and therefore can allow the cell housing to have desirable structural strength at least at a position where the first plate body is located, thereby effectively protecting the electrode assembly accommodated in the cell housing. The second plate body is thinner and therefore can provide a larger space for the electrode assembly, such that the electrode assembly can have a larger volume, thereby increasing the energy density of the cell including the cell housing of this application. In conclusion, the cell housing of this application can allow the cell including the cell housing to have both desirable structural strength and high energy density.

## BRIEF DESCRIPTION OF DRAWINGS

To describe the technical solutions of some embodiments of this application more clearly, the following briefly describes the accompanying drawings required for describing some embodiments of this application. Apparently, the accompanying drawings in the following descriptions show merely some embodiments of this application, and persons of ordinary skill in the art may still derive other drawings from the accompanying drawings without creative efforts.

FIG. 1 is a schematic exploded view of a cell housing according to a first embodiment of this application;
FIG. 2 is a schematic top view of a frame body according to the first embodiment of this application;
FIG. 3 is a schematic top view of a frame body according to a second embodiment of this application;
FIG. 4 is a schematic top view of a frame body according to a third embodiment of this application;
FIG. 5 is a schematic cross-sectional view of a cell housing according to the first embodiment of this application;
FIG. 6 is a schematic cross-sectional view of a cell housing according to a fourth embodiment of this application; and
FIG. 7 is a schematic cross-sectional view of a cell housing according to a fifth embodiment of this application.

## DESCRIPTION OF EMBODIMENTS

For ease of understanding this application, the following makes a more detailed description of this application with reference to the accompanying drawings and specific embodiments. It should be noted that when an element is referred to as being "fixed to" another element, it may be directly fixed to the another element, or there may be one or more elements therebetween. When an element is referred to as being "connected to" another element, it may be directly connected to the another element, or there may be one or more elements therebetween. Terms such as "vertical", "horizontal", "left", "right", and similar expressions used in this specification are for illustration only.

Unless otherwise defined, all technical and scientific terms used in this specification have the same meanings as commonly understood by persons skilled in the art to which this application belongs. The terms used in this specification of this application are merely for the purpose of describing specific embodiments, and are not intended to limit this application. The term 'and/or' used in this specification includes any and all combinations of one or more related listed items.

The accommodating cavity is defined in the cell housing, and the accommodating cavity is configured to accommodate the electrode assembly, so the cell housing provides functions of protecting and sealing the electrode assembly. In the related art, to increase the energy density of a cell, a thin sheet is used for manufacturing a cell housing, thereby enlarging space occupied by an electrode assembly. However, a small thickness of the cell housing results in an undesirable protection effect of the cell housing. To enhance the overall structural strength of the cell, a thick sheet is used for manufacturing the cell housing. However, a thick cell housing occupies too much space of the cell, so an arrangement space for the electrode assembly is reduced, resulting in low energy density of the cell. In conclusion, in the related art, cells cannot meet the requirements of both high structural strength and high energy density.

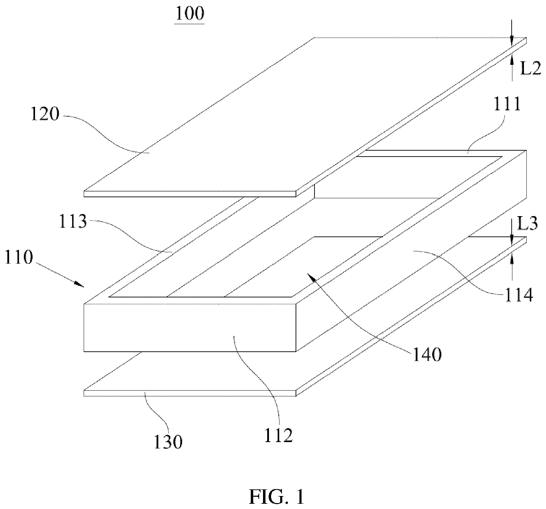

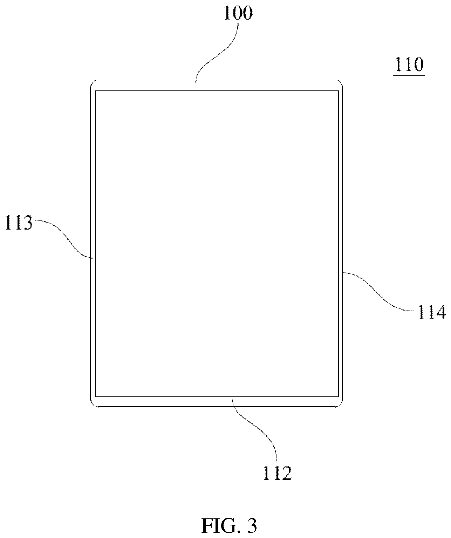

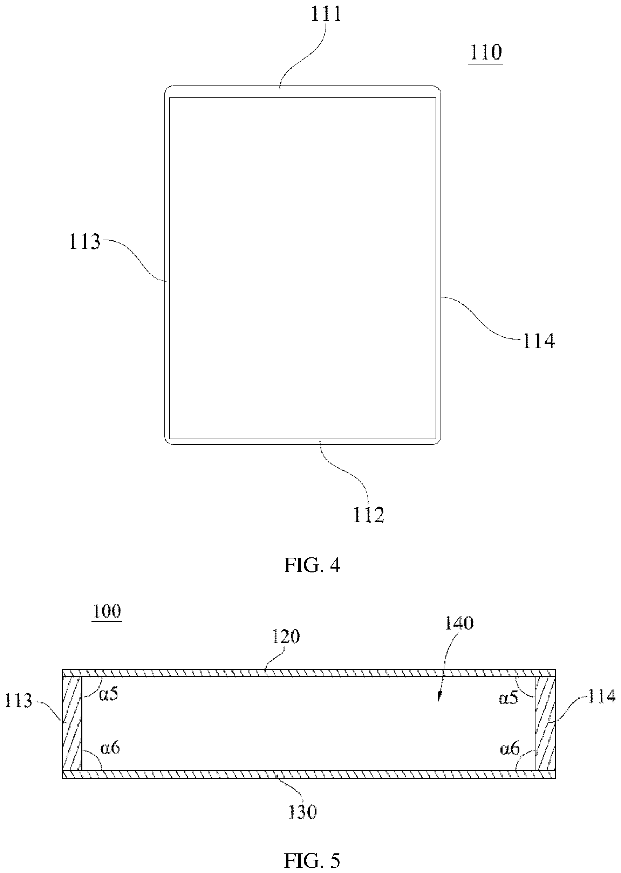

In view of this, referring to FIG. 1 to FIG. 7, an embodiment provides a cell housing 100, where the cell housing 100 can increase the energy density of a cell including the cell housing 100 while achieving high structural strength. In this embodiment, the cell housing 100 defines an accommodating cavity 140 for accommodating an electrode assembly. Specifically, the cell housing 100 includes a first plate body 111 and a second plate body 120.

The first plate body 111 is configured to define the accommodating cavity 140. In other words, at least one surface wall of the first plate body 111 faces the accommodating cavity 140 and is configured to enclose part of space of the accommodating cavity 140. The first plate body 111 may be a separate plate. Alternatively, the first plate body 111 may be one plate of a shell of the cell housing 100 or a portion of a plate of the cell housing 100.

The second plate body 120 is configured to define the accommodating cavity 140. In other words, at least one surface wall of the second plate body 120 faces the accommodating cavity 140 and is configured to enclose part of space of the accommodating cavity 140. The second plate body 120 may be a separate plate. Alternatively, the second plate body 120 may be one plate of a shell of the cell housing 100 or a portion of a plate of the cell housing 100.

A relative position relationship between the second plate body 120 and the first plate body 111 can be determined according to actual requirements. Specifically, the second plate body 120 may be opposite or adjacent to the first plate body 111, and the second plate body 120 and the first plate body 111 come into contact with each other or do not come into contact with each other. Shapes of the second plate body 120 and the first plate body 111 may also be determined according to actual requirements. The shapes of the second plate body 120 and the first plate body 111 may be regular or irregular. When the shapes of the second plate body 120 and the first plate body 111 are regular, they may each be a rectangular plate, a circular plate, or the like.

Particularly, in this embodiment, the maximum thickness L1 of the first plate body 111 is greater than the maximum thickness L2 of the second plate body 120, and the difference between the maximum thickness L1 of the first plate body 111 and the maximum thickness L2 of the second plate body 120 satisfies 0.01 mm<L1-L2<0.5 mm. For example, the difference L1-L2 between the maximum thickness L1 of the first plate body 111 and the maximum thickness L2 of the second plate body 120 may be 0.01 mm, 0.05 mm, 0.1 mm, 0.2 mm, 0.3 mm, 0.4 mm, or 0.5 mm.

It should be particularly noted that the thickness of each plate in this application is determined with respect to a wall surface of this plate facing the accommodating cavity 140, to be specific, a thickness direction of this plate is a direction perpendicular to the wall surface of this plate facing the accommodating cavity 140. The thickness direction of this plate is independent of its dimensions in various directions but is related to an arrangement position of this plate with respect to the accommodating cavity 140. For example, the thickness direction of the first plate body 111 is a direction perpendicular to a wall surface of the first plate body 111 facing the accommodating cavity 140.

In this solution, a maximum thickness of at least one plate (that is, the first plate body 111) of the cell housing 100 is greater than a maximum thickness of at least one plate (that is, the second plate body 120). In this way, the first plate body 111 is thicker and therefore can allow the cell housing 100 to have desirable structural strength at least at a position where the first plate body 111 is located, thereby effectively protecting the electrode assembly accommodated in the cell housing 100. The second plate body 120 is thinner and therefore can provide a larger space for the electrode assembly, such that the electrode assembly can have a larger volume, thereby increasing the energy density of the cell including the cell housing 100 of this application. In conclusion, the cell housing 100 of this application can allow the cell including the cell housing 100 to have both desirable structural strength and high energy density.

It should be noted that the first plate body 111 and the second plate body 120 may each be a plate with uniform thickness or may each be a plate with varying thickness. When the first plate body 111 and the second plate body 120 are each a plate with uniform thickness, the maximum thickness of the first plate body 111 is an average thickness of the first plate body 111, and the maximum thickness of the second plate body 120 is an average thickness of the second plate body 120. In this case, thickness of any position of the first plate body 111 is greater than thickness of any position of the second plate body 120.

According to actual requirements, when each position of the first plate body 111 needs to have a good protection effect, the first plate body 111 may be a plate with uniform thickness, so that each position of the first plate body 111 is thicker. Thus, each position of the first plate body 111 can have high structural strength. When only some regions of the first plate body 111 need to have a good protection effect, the first plate body 111 may be designed to have a larger thickness in corresponding positions of the regions. Thus, the positions corresponding to these regions of the first plate body 111 can have higher structural strength.

Specific thicknesses of the first plate body 111 and the second plate body 120 may be determined according to actual requirements, provided that the first plate body 111 has relatively high structural strength and the second plate body 120 has basic protection performance without occupying too much space of the electrode assembly. Specifically, the applicant has found through lots of experimental demonstrations that when the maximum thickness L1 of the first plate body 111 satisfies 0.1 mm<L1<l mm (for example, L1 may specifically be 0.1 mm, 0.3 mm, 0.5 mm, 0.7 mm, 0.9 mm, or 1 mm) and the maximum thickness L2 of the second plate body 120 satisfies 0.03 mm≤L2≤0.6 mm (for example, L2 may specifically be 0.03 mm, 0.09 mm, 0.15 mm, 0.3 mm, 0.45 mm, or 0.6 mm), the cell housing 100 can not only have desirable structural strength but also allow the cell including the cell housing 100 to have high energy density.

In this solution, when the maximum thickness of the first plate body 111 is within the foregoing size range, the first plate body 111 can have desirable structural strength. When the maximum thickness of the first plate body 111 is less than 0.1 mm, the first plate body 111 has undesirable structural strength. When the maximum thickness of the first plate body 111 is greater than 1 mm, the first plate body 111 occupies too much space in the entire cell, resulting in low energy density of the entire cell. When the second plate body 120 is within the foregoing size range, the second plate body 120 can have a basic protection effect without occupying too much space of the cell. When the maximum thickness of the second plate body 120 is less than 0.03 mm, the basic protection effect of the second plate body 120 cannot be guaranteed; and when thickness of the second plate body 120 is greater than 0.6 mm, the second plate body 120 occupies too much space, which is not conducive to increasing the energy density of the cell.

In a further embodiment, the cell housing 100 satisfies at least one of the following conditions (a) to (c).

(a) The maximum thickness L1 of the first plate body 111 satisfies 0.2 mm≤L1≤0.3 mm. For example, L1 may specifically be 0.2 mm, 0.22 mm, 0.24 mm, 0.26 mm, 0.28 mm, or 0.3 mm.
(b) The maximum thickness L2 of the second plate body 120 satisfies 0.075 mm≤L2≤0.15 mm. For example, L2 may specifically be 0.075 mm, 0.09 mm, 0.11 mm, 0.13 mm, or 0.15 mm.
(c) A ratio of the maximum thickness L1 of the first plate body 111 to the maximum thickness L2 of the second plate body 120 satisfies $1 < L1/L2 \leq 10$.

For example, $L1/L2$ may specifically be 1, 3, 5, 7, 9, or 10.

In the foregoing solutions, when the maximum thickness L1 of the first plate body 111 satisfies 0.2 mm≤L1≤0.3 mm, the cell including the cell housing 100 has higher structural strength. When the maximum thickness L2 of the second plate body 120 satisfies 0.075 mm≤L2≤0.15 mm, the cell including the cell housing 100 has higher energy density. When the ratio of the maximum thickness L1 of the first plate body 111 to the maximum thickness L2 of the second plate body 120 satisfies

$1 \leq L1/L2 \leq 10$, the structural strength and energy density of the cell including the cell housing 100 match each other better.

The first plate body 111 may be a single-layer plate body or a multi-layer plate body. When the first plate body 111 is a multi-layer plate body, the layers of the first plate body 111 have different functions. To improve the protection performance of the first plate body 111, a maximum thickness of a plate body of the first plate body 111 with a protection function needs to be within a set range. Specifically, the first plate body 111 includes a first plate layer; the first plate layer is made of a carbon material, a metal material, or a polymer material; and the first plate layer exerts a main protection function of the first plate body 111. Specifically, the maximum thickness of the first plate layer ranges from 0.1 mm to 0.4 mm. For example, the maximum thickness of the first plate layer may be 0.1 mm, 0.2 mm, 0.3 mm, or 0.4 mm.

In the materials mentioned in this application, the carbon material includes at least one of carbon felt, carbon film, carbon black, acetylene black, fullerene, conductive graphite film, or graphene film. The polymer material includes at least one member selected from a group consisting of polyethylene terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethylene naphthalene, polyvinylidene fluoride, polyethyl naphthalene dicarboxylate, polypropylene carbonate, poly(vinylidene fluoride-hexafluoropropylene), poly(vinylidene fluoride-co-chlorotrifluoroethylene), organosilicon, vinylon, polypropylene, acid anhydride modified polypropylene, polyethylene, other ethylene and their copolymers (EVA, EEA, EAA, and EVAL), polyvinyl chloride, polystyrene, other types of polyolefins, polyether nitrile, polyurethane, polyphenylene ether, polyester, polysulfone, amorphous α-olefin copolymer, or a derivative thereof. The metal material includes at least one member selected from a group consisting of Ni, Ti, Cu, Ag, Au, Pt, Fe, Co, Cr, W, Mo, Al, Mg, K, Na, Ca, Sr, Ba, Si, Ge, Sb, Pb, In, Zn, stainless steel, or a composition (alloy) thereof.

In this solution, when the maximum thickness of the first plate layer exerting a main support function in the first plate body 111 is within the foregoing ranges, the first plate body 111 has better overall structural strength. Certainly, when the first plate body 111 is a multi-layer plate body, the first plate layer is a plate body exerting the main protection function of the first plate body 111. When the first plate body 111 is a single-layer plate body, the first plate layer is the first plate body 111.

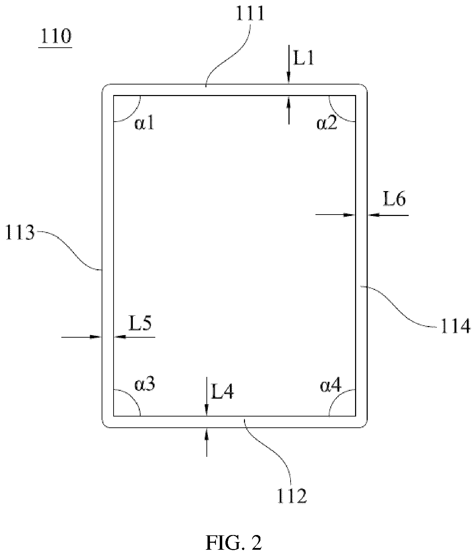

An arrangement position of the first plate body 111 and a relative position relationship between the first plate body 111 and the second plate body 120 may be determined according to actual requirements. In a specific embodiment, referring to FIG. 1 and FIG. 2, the cell housing 100 may include a frame body 110, a second plate body 120, and a third plate body 130.

The frame body 110 is annular; the frame body 110 includes the first plate body 111; the frame body 110 includes a first end opening and a second end opening facing each other; and the second plate body 120 is connected to the frame body 110 and covers the first end opening. The third plate body 130 is connected to the frame body 110 and covers the second end opening. The frame body 110, the second plate body 120, and a third plate body 130 jointly define the accommodating cavity 140 of the cell housing 100. In this solution, the frame body 110 is provided with a plate body with a large maximum thickness, so that the frame body 110 has higher structural strength and better protection effect. Moreover, in this embodiment, the accommodating cavity 140 is defined by a structure including a single frame body 110 and two plate bodies (that are, the second plate body 120 and the third plate body 130), so that at intersections located at the accommodating cavity 140, the frame body 110 angularly intersects with the second plate body 120 and the third plate body 130 rather than intersects with the second plate body 120 and the third plate body 130 in an arc-shaped chamfer. In this way, the electrode assembly in the cell housing 100 does not generate position interference with the cell housing 100 at the intersections, thereby further enlarging the arrangement space for the electrode assembly and increasing the energy density of the cell.

The frame body 110 is annular. Therefore, when the electrode assembly is disposed in the accommodating cavity 140, the frame body 110 is arranged around the electrode assembly. The frame body 110 may be around the electrode assembly in any direction. In this embodiment, the frame body 110 is configured to be disposed around an axis parallel to a thickness direction of the electrode assembly. In this structural design, a thickness direction of the first plate body 111 with a large maximum thickness on the frame body 110 is substantially perpendicular to the thickness direction of the electrode assembly. Therefore, as the thickness of the first plate body 111 increases, the electrode assembly has less volume reduction. In other words, in this embodiment, the first plate body 111 occupies a smaller space, thereby achieving high energy density while guaranteeing the structural strength of the cell.

The third plate body 130 and the second plate body 120 are disposed opposite each other at two ends of the frame body 110. When the shape of the frame body 110 is regular, the shapes of the third plate body 130 and the second plate body 120 are substantially the same. To facilitate manufacturing, the third plate body 130 and the second plate body 120 may be made to have the same shape and structure. In this case, the thicknesses of the third plate body 130 and the second plate body 120 are substantially the same. Specifically, a difference between the maximum thickness L3 of the third plate body 130 and the maximum thickness L2 of the second plate body 120 satisfies $0 \leq |L3-L2| \leq 0.2$ mm. For example, the absolute value IL3-L21 of the difference between the maximum thickness L3 of the third plate body 130 and the maximum thickness L2 of the second plate body 120 may be 0 mm, 0.04 mm, 0.08 mm, 0.12 mm, 0.16 mm, or 0.2 mm.

When the frame body 110 is configured to be disposed around the axis parallel to the thickness direction of the electrode assembly, the thickness direction of the third plate body 130 is substantially parallel to the thickness direction of the electrode assembly. In this case, the third plate body 130 with an increased thickness occupies too much space of the electrode assembly. In this case, the maximum thickness of the third plate body 130 is substantially the same as the relatively small maximum thickness of the second plate body 120, thereby further increasing the energy density of the cell including the cell housing 100.

The frame body 110 may include only one plate body (that is, the first plate body 111) with a large maximum thickness or may include a plurality of plate bodies with a large maximum thickness. In this embodiment, referring to FIG. 1 and FIG. 2, the frame body 110 further includes a fourth plate body 112 opposite the first plate body 111. The difference between the maximum thickness L4 of the fourth plate body 112 and the maximum thickness L1 of the first plate body 111 satisfies $0 \leq |L4-L1| \leq 0.15$ mm. For example, the absolute value IL4-L11 of the difference between the maximum thickness L4 of the fourth plate body 112 and the maximum thickness L1 of the first plate body 111 may be 0 mm, 0.05 mm, 0.1 mm, or 0.15 mm. In other words, the maximum thicknesses of the fourth plate body 112 and the third plate body 130 are substantially the same. In this solution, the two opposite plate bodies of the frame body 110 are thick, further enhancing the structural strength of the cell housing 100.

A specific shape of the frame body 110 may be determined according to specific requirements. For example, the frame body 110 may be a rectangular frame, a pentagonal frame, a hexagonal frame, or a waist-shaped frame. Referring to FIG. 1 and FIG. 2, in this embodiment, the frame body 110 is a rectangular frame, and the frame body 110 further includes a fifth plate body 113 and a sixth plate body 114. A first end of the fifth plate body 113 is connected to a first end of the first plate body 111, and a second end of the fifth plate body 113 is connected to a first end of the fourth plate body 112. The sixth plate body 114 is opposite the fifth plate body 113, a first end of the sixth plate body 114 is connected to a second end of the first plate body 111, and a second end of the sixth plate body 114 is connected to a second end of the fourth plate body 112.

When the frame body 110 is a rectangular frame and the frame body 110 includes two opposite thick plate bodies (that are, the first plate body 111 and the fourth plate body 112), the maximum thicknesses of the fifth plate body 113 and the sixth plate body 114 may be greater than that of the second plate body 120 or less than that of the first plate body 111. In an embodiment, the difference between the maximum thickness L5 of the fifth plate body 113 and the maximum thickness L1 of the first plate body 111 satisfies $0 \leq |L5-L1| \leq 0.5$ mm. For example, the absolute value IL5-L11 of the difference between the maximum thickness L5 of the fifth plate body 113 and the maximum thickness L1 of the first plate body 111 may be 0 mm, 0.1 mm, 0.2 mm, 0.3 mm, 0.4 mm, or 0.5 mm. In other words, the maximum thicknesses of the fifth plate body 113 and the first plate body 111 are substantially the same. The maximum thickness L6 of the sixth plate body 114 and the maximum thickness L1 of the first plate body 111 satisfy $0 \leq |L6-L1| \leq 0.5$ mm. For example, the absolute value IL6-L11 of the difference between the maximum thickness L6 of the sixth plate body 114 and the maximum thickness L1 of the first plate body 111 may be 0 mm, 0.1 mm, 0.2 mm, 0.3 mm, 0.4 mm, or 0.5 mm. In other words, the maximum thicknesses of the sixth plate body 114 and the fifth plate body 113 are substantially the same. In this solution, the frame body 110 is a rectangular frame formed by a combination of the first plate body 111, the fourth plate body 112, the fifth plate body 113, and the sixth plate body 114. The first plate body 111, the fourth plate body 112, the fifth plate body 113, and the sixth plate body 114 are all substantially the same in thickness. Moreover, the first plate body 111, the fourth plate body 112, the fifth plate body 113, and the sixth plate body 114 are all thicker than the second plate body 112, such that the cell housing 100 can have a good protection effect at any position of the circumference of the frame body 110, thereby further enhancing the structural strength of the cell including the cell housing 100.

In a further embodiment, the cell housing 100 satisfies at least one of the following conditions (e) to (h).

(e) An inner wall of the first plate body 111 facing the accommodating cavity 140 angularly intersects with an inner wall of the fifth plate body 113 facing the accommodating cavity 140, and an intersection angle $\alpha 1$ satisfies $80°\leq\alpha 1\leq 100°$. For example, the included angle $\alpha 1$ of the inner wall of the first plate body 111 facing the accommodating cavity 140 and the inner wall of the fifth plate body 113 facing the accommodating cavity 140 at an intersection of the inner walls may specifically be 80°, 85°, 90°, 95°, or 100°.

(f) The inner wall of the first plate body 111 facing the accommodating cavity 140 angularly intersects with an inner wall of the sixth plate body 114 facing the accommodating cavity 140, and an intersection angle $\alpha 2$ satisfies $80°\leq\alpha 2\leq 100°$. For example, the included angle $\alpha 2$ of the inner wall of the first plate body 111 facing the accommodating cavity 140 and the inner wall of the sixth plate body 114 facing the accommodating cavity 140 at an intersection of the inner walls may specifically be 80°, 85°, 90°, 95°, or 100°.

(g) An inner wall of the fourth plate body 112 facing the accommodating cavity 140 angularly intersects with an inner wall of the fifth plate body 113 facing the accommodating cavity 140, and an intersection angle $\alpha 3$ satisfies $80°\leq\alpha 3\leq 100°$. For example, the included angle $\alpha 3$ of the inner wall of the fourth plate body 112 facing the accommodating cavity 140 and the inner wall of the fifth plate body 113 facing the accommodating cavity 140 at an intersection of the inner walls may specifically be 80°, 85°, 90°, 95°, or 100°.

(h) An inner wall of the fourth plate body 112 facing the accommodating cavity 140 angularly intersects with an inner wall of the sixth plate body 114 facing the accommodating cavity 140, and an intersection angle $\alpha 4$ satisfies $80°\leq\alpha 4\leq 100°$. For example, the included angle $\alpha 4$ of the inner wall of the fourth plate body 112 facing the accommodating cavity 140 and the inner wall of the sixth plate body 114 facing the accommodating cavity 140 at an intersection of the inner walls may specifically be 80°, 85°, 90°, 95°, or 100°.

In this solution, at least one corner end of the frame body 110 is arranged in a right angle. Compared with an arrangement in which corner ends of two plate bodies form an arc angle in the related art, the arrangement in this solution allows for a larger arrangement space for the electrode assembly and allows the cell to have higher energy density.

In a further embodiment, an inner wall of the second plate body 120 facing the accommodating cavity 140 angularly intersects with each of the inner wall of the first plate body 111 facing the accommodating cavity 140, the inner wall of the fourth plate body 112 facing the accommodating cavity 140, the inner wall of the fifth plate body 113 facing the accommodating cavity 140, and the inner wall of the sixth plate body 114 facing the accommodating cavity 140, and an intersection angle $\alpha 5$ satisfies $80°\leq\alpha 5\leq 100°$. For example, $\alpha 5$ may be 80°, 85°, 90°, 95°, or 100°. An inner wall of the third plate body 130 facing the accommodating cavity 140 angularly intersects with each of the inner wall of the first plate body 111 facing the accommodating cavity 140, the inner wall of the fourth plate body 112 facing the accommodating cavity 140, the inner wall of the fifth plate body 113 facing the accommodating cavity 140, and the inner wall of the sixth plate body 114 facing the accommodating cavity 140, and an intersection angle $\alpha 6$ satisfies $80°\leq\alpha 6\leq 100°$. For example, $\alpha 6$ may be 80°, 85°, 90°, 95°, or 100°. In this solution, a corner end at a joint between the frame body 110 and the second plate body 120 or the third plate body 130 is substantially in right-angled intersection. Compared with an arrangement in which corner ends of two plate bodies form an arc angle in the related technology, the arrangement in this solution allows for a larger arrangement space for the electrode assembly and allows the cell to have higher energy density.

The frame body 110 may be configured to accommodate a laminated electrode assembly or a wound electrode assembly. The applicant considers that when the frame body 110 is configured to accommodate a wound electrode assembly, the wound electrode assembly includes a first bent portion and a second bent portion opposite each other, and outer side edges of the first bent portion and second bent portion are both arc-shaped surfaces. After the wound electrode assembly is placed into the cell housing 100, the first bent portion and the second bent portion are both in linear contact with the frame body 110, and a large gap is present at an intersection between the first bent portion and the frame body 110 and at an intersection between the second bent portion and the frame body 110, wasting space and therefore reducing the energy density of the cell.

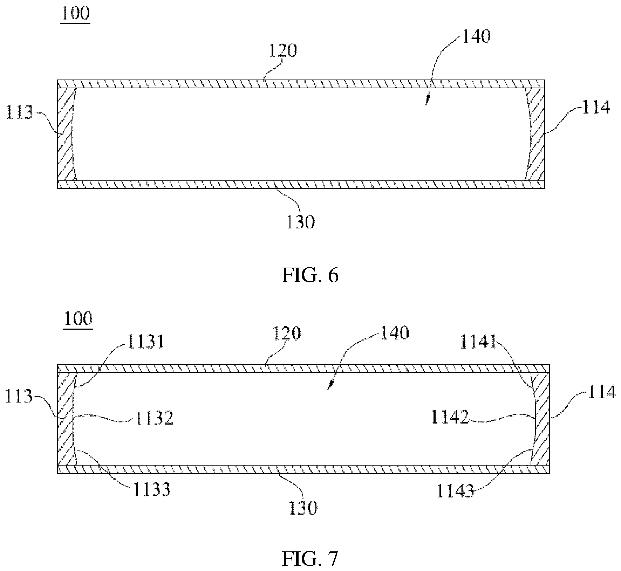

In view of this, referring to FIG. 6 and FIG. 7, in an embodiment, the cell housing 100 is configured to accommodate a wound electrode assembly. The wound electrode assembly includes a first bent portion and a second bent portion opposite each other. Outer side surfaces of the first bent portion and second bent portion are arc-shaped. The inner wall of the fifth plate body 113 is recessed toward a direction away from the accommodating cavity 140 so as to accommodate a side edge of the first bent portion facing the fifth plate body 113. In this embodiment, the first bent portion and the inner wall of the fifth plate body 113 match better in shape, resulting in less wasted space at the intersection between the first bent portion and the fifth plate body 113, thereby allowing the cell to have higher overall energy density. The inner wall of the sixth plate body 114 is recessed toward a direction away from the accommodating cavity 140 so as to accommodate a side edge of the second bent portion facing the sixth plate body 114. In this embodiment, the second bent portion and the inner wall of the sixth plate body 114 match better in shape, resulting in less wasted space at the intersection between the second bent portion and the sixth plate body 114, thereby allowing the cell to have higher overall energy density.

In an embodiment, an inner wall surface of the fifth plate body 113 and an inner wall surface of the sixth plate body 114 may be arc-shaped recesses, so that the first bent portion can be better attached to the inner wall surface of the fifth plate body 113, and the second bent portion can be better attached to the inner wall surface of the sixth plate body 114, thereby reducing space waste rate of the accommodating cavity 140. Referring FIG. 6, when the inner wall surface of the fifth plate body 113 is an arc-shaped recess, specifically an orthographic projection of the inner wall of the fifth plate body 113 facing the accommodating cavity 140 in a first projection plane is an arc-shaped line, and the first projection plane is parallel to a thickness direction of the fifth plate body 113. When the inner wall surface inner wall surface of the fifth plate body 113 is an arc-shaped recess, an orthographic projection of the inner wall of the sixth plate body 114 facing the accommodating cavity 140 in the first projection plane is an arc-shaped line. In this solution, the concave shape of the fifth plate body 113 better matches the shape of the first bent portion of the electrode assembly, and the concave shape of the sixth plate body 114 better matches the shape of the second bent portion, thereby reducing loss of structural strength while maximizing the energy density.

In another embodiment, the inner wall surface of the fifth plate body 113 and the inner wall surface of the sixth plate body 114 may be rectangular or trapezoidal recesses. Specifically, referring to FIG. 7, the inner wall of the fifth plate body 113 facing the accommodating cavity 140 includes a first planar wall 1131, a second planar wall 1132, and a third planar wall 1133; a side edge of the first planar wall 1131 is connected to the second plate body 120, and another side edge extends toward an outer wall of the fifth plate body 113 facing away from the accommodating cavity 140 and is connected to the second planar wall; and a side edge of the third planar wall is connected to the third plate body 130, and another side edge extends toward the outer wall of the fifth plate body 113 facing away from the accommodating cavity 140 and is connected to a side edge of the second planar wall facing away from the first planar wall. The inner wall of the sixth plate body 114 facing the accommodating cavity 140 includes a fourth planar wall 1141, a fifth planar wall 1142, and a sixth planar wall 1143; a side edge of the fourth planar wall 1141 is connected to the second plate body 120, and another side edge extends toward an outer wall of the sixth plate body 114 facing away from the accommodating cavity 140 and is connected to the fifth planar wall; and a side edge of the sixth planar wall is connected to the third plate body 130, and another side edge extends toward the outer wall of the sixth plate body 114 facing away from the accommodating cavity 140 and is connected to a side edge of the fifth planar wall facing away from the fourth planar wall. In this solution, the inner wall surface of the fifth plate body 113 and the inner wall surface of the sixth plate body 114 are more convenient to process, and the shapes thereof can match more types of electrode assemblies, achieving better adaptability.

A formation process of the frame body 110 may be determined according to actual requirements. In an embodiment, the frame body 110 is formed by various constituent plates through welding or adhesion. In another embodiment, the frame body 110 may be an integrally formed structure. When formed through an integral formation process, the frame body 110 has higher overall structural strength, thereby allowing the cell housing 100 to have a better protection effect.

Each plate body of the cell housing 100 may be a plate with uniform thickness or a plate body with varying thickness. To facilitate processing and manufacturing, in an embodiment, the first plate body 111, the second plate body 120, the third plate body 130, the fourth plate body 112, the fifth plate body 113, and the sixth plate body 114 may each be a plate body with uniform thickness. In this solution, each plate body is configured to have a uniform thickness. To be specific, the maximum thickness of each plate body is substantially the same as a minimum thickness thereof, such that regularity of space in the accommodating cavity 140 can be improved, facilitating structural arrangement of the cell.

Each plate body of the cell housing 100 may be a single-layer plate or a multi-layer plate. The applicant considers that no matter whether the plate bodies in the cell housing 100 are single-layer plates or multi-layer plates, it is necessary to limit thickness of a plate layer primarily for support and protection in each plate body. Therefore, in an embodiment, the cell housing 100 satisfies at least one of the following conditions (i) to (m).

(i) The second plate body 120 includes a second plate layer, the second plate layer is made of a ceramic material, a carbon material, or a polymer material, and a maximum thickness of the second plate layer ranges from 0.03 mm to 0.2 mm (which may specifically be 0.03 mm, 0.08 mm, 0.13 mm, 0.18 mm, or 0.2 mm). When the foregoing condition is satisfied, and the material and maximum thickness of the second plate layer exerting a main protection function in the second plate body 120 are within the foregoing ranges, the second plate layer can have a basic protection effect and does not occupy too much space.

(j) The third plate body 130 includes a third plate layer, the third plate layer is made of a ceramic material, a carbon material, or a polymer material, and a maximum thickness of the third plate layer ranges from 0.03 mm to 0.2 mm (which may specifically be 0.03 mm, 0.08 mm, 0.13 mm, 0.18 mm, or 0.2 mm). When the material and maximum thickness of the third plate layer exerting a main protection function in the third plate body 130 are within the foregoing ranges, the third plate layer can have a basic protection effect and does not occupy too much space.

(k) The fourth plate body 112 includes a fourth plate layer, the fourth plate layer is made of a carbon material, a metal material, or a polymer material, and a maximum thickness of the fourth plate layer ranges from 0.1 mm to 0.4 mm (which may specifically be 0.1 mm, 0.2 mm, 0.3 mm, or 0.4 mm). When the material and maximum thickness of the fourth plate layer exerting a main protection function in the fourth plate body 112 are within the foregoing ranges, the fourth plate layer can have high structural strength without occupying too much space.

(1) The fifth plate body 113 includes a fifth plate layer, the fifth plate layer is made of a carbon material, a metal material, or a polymer material, and a maximum thickness of the fifth plate layer ranges from 0.1 mm to 0.4 mm (which may specifically be 0.1 mm, 0.2 mm, 0.3 mm, or 0.4 mm). When the material and maximum thickness of the fifth plate layer exerting a main protection function in the fifth plate body 113 are within the foregoing ranges, the fifth plate layer can have high structural strength without occupying too much space.

(m) The sixth plate body 114 includes a sixth plate layer, the sixth plate layer is made of a carbon material, a metal material, or a polymer material, and a maximum thickness of the sixth plate layer ranges from 0.1 mm to 0.4 mm (which may specifically be 0.1 mm, 0.2 mm, 0.3 mm, or 0.4 mm). When the material and maximum thickness of the sixth plate layer exerting a main protection function in the sixth plate body 114 are within the foregoing ranges, the sixth plate layer can have high structural strength without occupying too much space.

In an embodiment, the second plate body 120 and the third plate body 130 can both be welded to the frame body 110. In this solution, the second plate body 120 and the third plate body 130 have higher connection strength with the frame body 110.

In an embodiment, the second plate body 120 is provided with an explosion-proof valve. In this solution, the explosion-proof valve is disposed on the thinner second plate body 120, which can reduce processing difficulty of the explosion-proof valve and also enhance protection function of the explosion-proof valve.

In an embodiment, the first plate body 111 is provided with an electrolyte injection hole in communication with the accommodating cavity 140. In this solution, the electrolyte injection hole is provided in the thicker first plate body 111, which can facilitate opening and sealing of the electrolyte injection hole.

In an embodiment, the first plate body 111 is provided with a pole. In this solution, the pole is disposed on the thicker first plate body 111, which can facilitate arrangement of the pole.

According to a second aspect, this application further provides a cell, where the cell includes the cell housing 100 and electrode assembly according to any one of the foregoing embodiments. The cell housing 100 defines an accommodating cavity 140, and a electrode assembly is disposed in the accommodating cavity 140.

According to a third aspect, this application further provides a battery, where the battery includes the cell according to the cell in the foregoing embodiments. Specifically, the battery may include one or a plurality of battery cells, and when the battery includes a plurality of cells, the cells may be connected in series or in parallel with each other.

According to a fourth aspect, this application further provides an electric device, where the electric device includes the battery in the foregoing embodiments. Specifically, the electric device may be a mobile device such as a mobile phone, a tablet computer, or a notebook computer. The electric device may also be a transportation tool such as an electric vehicle and an electric motorcycle.

It should be noted that the specification and accompanying drawings of this application provide preferred embodiments of this application. However, this application may be implemented in many different manners, and is not limited to some embodiments described in this specification. These embodiments are not intended as additional limitations on the content of this application. These embodiments are provided to clearly and completely describe this application. In addition, the foregoing technical features are further combined with each other to form various embodiments not listed above, which are construed as falling within the scope of the specification of this application. Further, persons of ordinary skill in the art can make improvements or transformations according to the above description, and all these improvements and transformations should fall within the protection scope of the appended claims of this application.

## Claims

1. A cell housing defining an accommodating cavity for accommodating an electrode assembly, wherein the cell housing comprises:

a first plate body, wherein the first plate body is configured to define the accommodating cavity; and

a second plate body, wherein the second plate body is configured to define the accommodating cavity;

wherein a maximum thickness L1 of the first plate body is greater than a maximum thickness L2 of the second plate body, and 0.01 mm<L1-L2<0.5 mm.

2. The cell housing according to claim 1, wherein

the maximum thickness L1 of the first plate body satisfies 0.1 mm<Ll<l mm; and
the maximum thickness L2 of the second plate body satisfies 0.03 mm≤L2≤0.6

mm.

3. The cell housing according to claim 2, wherein the cell housing satisfies at least one of the following conditions (a) to (c):

(a) the maximum thickness L1 of the first plate body satisfies 0.2 mm≤L1≤0.3 mm;
(b) the maximum thickness L2 of the second plate body satisfies 0.075 mm≤L2≤0.15 mm; or
(c) a ratio of the maximum thickness L1 of the first plate body to the maximum thickness L2 of the second plate body satisfies $1 < L1/L2 \leq 10$.

4. The cell housing according to claim 2, wherein the first plate body comprises a first plate layer; the first plate layer is made of a carbon material, a metal material, or a polymer material; and a maximum thickness of the first plate layer ranges from 0.1 mm to 0.4 mm.

5. The cell housing according to claim 2, comprising:

a frame body, wherein the frame body is annular, the frame body comprises the first plate body, the frame body comprises a first end opening and a second end opening facing each other, and the second plate body is connected to the frame body and covers the first end opening; and
a third plate body, wherein the third plate body is connected to the frame body and covers the second end opening;
wherein the frame body, the first plate body, and the third plate body jointly define the accommodating cavity.

6. The cell housing according to claim 5, wherein the frame body is configured to be disposed around an axis parallel to a thickness direction of the electrode assembly.

7. The cell housing according to claim 5, wherein a difference between a maximum thickness L3 of the third plate body and the maximum thickness L2 of the second plate body satisfies:

$$0 \leq |L3 - L2| \leq 0.2 \text{ mm.}$$

8. The cell housing according to claim 5, wherein the frame body further comprises a fourth plate body opposite the first plate body, and a difference between a maximum thickness L4 of the fourth plate body and the maximum thickness L1 of the first plate body satisfies:

$$0 \leq |L4 - L1| \leq 0.15 \text{ mm.}$$

9. The cell housing according to claim 8, wherein the frame body further comprises:

a fifth plate body, wherein a first end of the fifth plate body is connected to a first end of the first plate body, and a second end of the fifth plate body is connected to a first end of the fourth plate body; and
a sixth plate body, wherein the sixth plate body is opposite the fifth plate body, a first end of the sixth plate body is connected to a second end of the first plate body, and a second end of the sixth plate body is connected to a second end of the fourth plate body;
wherein a difference between a maximum thickness L5 of the fifth plate body and the maximum thickness L1 of the first plate body satisfies:

$$0 \leq |L5 - L1| \leq 0.5 \text{ mm;}$$

and
a maximum thickness L6 of the sixth plate body and the maximum thickness L1 of the first plate body satisfy:

$$0 \leq |L6 - L1| \leq 0.5 \text{ mm.}$$

10. The cell housing according to claim 9, wherein the cell housing satisfies at least one of the following conditions (e) to (h):

(e) an inner wall of the first plate body facing the accommodating cavity angularly intersects with an inner wall of the fifth plate body facing the accommodating cavity, and an intersection angle $\alpha1$ satisfies $80°\leq\alpha1\leq100°$;

(f) an inner wall of the first plate body facing the accommodating cavity angularly intersects with an inner wall of the sixth plate body facing the accommodating cavity, and an intersection angle $\alpha2$ satisfies $80°\leq\alpha2\leq100°$;

(g) an inner wall of the fourth plate body facing the accommodating cavity angularly intersects with an inner wall of the fifth plate body facing the accommodating cavity, and an intersection angle $\alpha3$ satisfies $80°\leq\alpha3\leq100°$; or

(h) an inner wall of the fourth plate body facing the accommodating cavity angularly intersects with an inner wall of the sixth plate body facing the accommodating cavity, and an intersection angle $\alpha4$ satisfies $80°\leq\alpha4\leq100°$.

11. The cell housing according to claim 9, wherein

an inner wall of the second plate body facing the accommodating cavity angularly intersects with each of an inner wall of the first plate body facing the accommodating cavity, an inner wall of the fourth plate body facing the accommodating cavity, an inner wall of the fifth plate body facing the accommodating cavity, and an inner wall of the sixth plate body facing the accommodating cavity, and an intersection angle $\alpha5$ satisfies $80°\leq\alpha5\leq100°$; and

an inner wall of the third plate body facing the accommodating cavity angularly intersects with each of an inner wall of the first plate body facing the accommodating cavity, an inner wall of the fourth plate body facing the accommodating cavity, an inner wall of the fifth plate body facing the accommodating cavity, and an inner wall of the sixth plate body facing the accommodating cavity, and an intersection angle $\alpha6$ satisfies $80°\leq\alpha6\leq100°$.

12. The cell housing according to claim 11, wherein

the cell housing is configured to accommodate a wound electrode assembly, and the wound electrode assembly comprises a first bent portion and a second bent portion opposite each other; and

the inner wall of the fifth plate body is recessed toward a direction away from the accommodating cavity so as to accommodate a side edge of the first bent portion facing the fifth plate body, and the inner wall of the sixth plate body is recessed toward a direction away from the accommodating cavity so as to accommodate a side edge of the second bent portion facing the sixth plate body.

13. The cell housing according to claim 12, wherein

an orthographic projection of the inner wall of the fifth plate body facing the accommodating cavity in a first projection plane is an arc-shaped line, and the first projection plane is parallel to a thickness direction of the fifth plate body; or

an orthographic projection of the inner wall of the sixth plate body facing the accommodating cavity in the first projection plane is an arc-shaped line.

14. The cell housing according to claim 12, wherein

the inner wall of the fifth plate body facing the accommodating cavity comprises a first planar wall, a second planar wall, and a third planar wall; a side edge of the first planar wall is connected to the second plate body, and another opposite side edge extends toward an outer wall of the fifth plate body facing away from the accommodating cavity and is connected to the second planar wall; and a side edge of the third planar wall is connected to the third plate body, and another opposite side edge extends toward the outer wall of the fifth plate body facing away from the accommodating cavity and is connected to a side edge of the second planar wall facing away from the first planar wall;

or

the inner wall of the sixth plate body facing the accommodating cavity comprises a fourth planar wall, a fifth planar wall, and a sixth planar wall; a side edge of the fourth planar wall is connected to the second plate body, and another opposite side edge extends toward an outer wall of the sixth plate body facing away from the accommodating cavity and is connected to the fifth planar wall; and a side edge of the sixth planar wall is connected to the third plate body, and another opposite side edge extends toward the outer wall of the sixth plate body facing away from the accommodating cavity and is connected to a side edge of the fifth planar wall facing away from the fourth planar wall.

15. The cell housing according to claim 5, wherein the frame body is an integrally formed structure.

16. The cell housing according to claim 9, wherein the first plate body, the second plate body, the third plate body, the fourth plate body, the fifth plate body, and the sixth plate body are each a plate body with uniform thickness.

**17.** The cell housing according to claim 9, wherein the cell housing satisfies at least one of the following conditions (i) to (m):

(i) the second plate body comprises a second plate layer, the second plate layer is made of a ceramic material, a carbon material, or a polymer material, and a maximum thickness of the second plate layer ranges from 0.03 mm to 0.2 mm;

(j) the third plate body comprises a third plate layer, the third plate layer is made of a ceramic material, a carbon material, or a polymer material, and a maximum thickness of the third plate layer ranges from 0.03 mm to 0.2 mm;

(k) the fourth plate body comprises a fourth plate layer, the fourth plate layer is made of a carbon material, a metal material, or a polymer material, and a maximum thickness of the fourth plate layer ranges from 0.1 mm to 0.4 mm;

(1) the fifth plate body comprises a fifth plate layer, the fifth plate layer is made of a carbon material, a metal material, or a polymer material, and a maximum thickness of the fifth plate layer ranges from 0.1 mm to 0.4 mm; or

(m) the sixth plate body comprises a sixth plate layer, the sixth plate layer is made of a carbon material, a metal material, or a polymer material, and a maximum thickness of the sixth plate layer ranges from 0.1 mm to 0.4 mm.

**18.** The cell housing according to claim 5, wherein

the second plate body is welded to the frame body; and
the third plate body is welded to the frame body.

**19.** The cell housing according to claim 1, wherein the second plate body is provided with an explosion-proof valve.

**20.** The cell housing according to claim 1, wherein the first plate body is provided with an electrolyte injection hole in communication with the accommodating cavity.

**21.** The cell housing according to claim 1, wherein the first plate body is provided with a pole.

**22.** A cell, comprising:

the cell housing according to any one of claims 1 to 21; and
the electrode assembly disposed in the accommodating cavity.

**23.** A battery, comprising the cell according to claim 22.

**24.** An electric device, comprising the battery according to claim 23.

FIG. 1

FIG. 2

100

110

113

114

112

FIG. 3

111

110

113

114

112

FIG. 4

100

120

140

113

α5

α5

114

α6

α6

130

FIG. 5

FIG. 6

FIG. 7

## INTERNATIONAL SEARCH REPORT

| | International application No. |
|---|---|
| | **PCT/CN2021/130484** |

| **A.** | **CLASSIFICATION OF SUBJECT MATTER** |
|---|---|
| | H01M 50/10(2021.01)i |

According to International Patent Classification (IPC) or to both national classification and IPC

| **B.** | **FIELDS SEARCHED** |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 电芯, 壳, 板, 厚度, 电极组件, 能量密度, battery, cell, electrode, core, plate, shell, frame, thickness, energy, density

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 110246994 A (BANGTAIL HONGTU (SHENZHEN) TECHNOLOGY CO., LTD.) 17 September 2019 (2019-09-17) description, paragraphs 0025-0036, and figures 1-4 | | 1-11, 15-24 |
| Y | CN 110246994 A (BANGTAIL HONGTU (SHENZHEN) TECHNOLOGY CO., LTD.) 17 September 2019 (2019-09-17) description, paragraphs 0025-0036, and figures 1-4 | | 12-14 |
| X | CN 207868254 U (BANGTAIL HONGTU (SHENZHEN) TECHNOLOGY CO., LTD.) 14 September 2018 (2018-09-14) description, paragraphs 0051-0062, and figures 1-4 | | 1-11, 15-24 |
| Y | CN 207868254 U (BANGTAIL HONGTU (SHENZHEN) TECHNOLOGY CO., LTD.) 14 September 2018 (2018-09-14) description, paragraphs 0051-0062, and figures 1-4 | | 12-14 |
| Y | CN 212695228 U (DONGGUAN TAFEL NEW ENERGY TECHNOLOGY CO., LTD. et al.) 12 March 2021 (2021-03-12) description, paragraphs 0030-0039, and figures 2-3 | | 12-14 |
| A | US 2008196240 A1 (LIN YONGHUANG et al.) 21 August 2008 (2008-08-21) entire document | | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2022** | **18 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | | International application No. |
|---|---|---|---|
| Information on patent family members | | | **PCT/CN2021/130484** |

| Patent document cited in search report | | | Publication date (day/month/year) | Patent family member(s) | | | Publication date (day/month/year) |
|---|---|---|---|---|---|---|---|
| CN | 110246994 | A | 17 September 2019 | None | | | |
| CN | 207868254 | U | 14 September 2018 | None | | | |
| CN | 212695228 | U | 12 March 2021 | None | | | |
| US | 2008196240 | A1 | 21 August 2008 | TW | 200835028 | A | 16 August 2008 |

Form PCT/ISA/210 (patent family annex) (January 2015)